Europäisches Patentamt

European Patent Office

Office européen des brevets

(19)

(11) **EP 0 701 743 B1**

(12) **EUROPÄISCHE PATENTSCHRIFT**

(45) Veröffentlichungstag und Bekanntmachung des Hinweises auf die Patenterteilung:
**22.01.1997 Patentblatt 1997/04**

(21) Anmeldenummer: **93912556.3**

(22) Anmeldetag: **03.06.1993**

(51) Int Cl.$^6$: **H02J 3/26**

(86) Internationale Anmeldenummer:
**PCT/DE93/00478**

(87) Internationale Veröffentlichungsnummer:
**WO 94/29939 (22.12.1994 Gazette 1994/28)**

(54) **VERFAHREN UND VORRICHTUNG ZUR REDUZIERUNG VON SPANNUNGSUNSYMMETRIEN IN EINEM DREHSTROMNETZ MITTELS EINES STATISCHEN KOMPENSATORS**

PROCESS AND DEVICE FOR REDUCING ASYMMETRIC VOLTAGES IN A THREE-PHASE SYSTEM BY MEANS OF A STATIC COMPENSATOR

PROCEDE ET DISPOSITIF PERMETTANT DE REDUIRE LES TENSIONS ASYMETRIQUES DANS UN RESEAU TRIPHASE AU MOYEN D'UN COMPENSATEUR STATIQUE

(84) Benannte Vertragsstaaten:
**CH DE FR GB IT LI SE**

(43) Veröffentlichungstag der Anmeldung:
**20.03.1996 Patentblatt 1996/12**

(73) Patentinhaber: **SIEMENS AKTIENGESELLSCHAFT
80333 München (DE)**

(72) Erfinder: **BERGMANN, Klaus
D-96050 Bamberg (DE)**

(56) Entgegenhaltungen:
**DE-A- 3 105 042          DE-A- 3 927 437
US-A- 5 091 839**

**Beschreibung**

Die Erfindung bezieht sich auf ein Verfahren und eine Vorrichtung zur Reduzierung von Spannungsunsymmetrien in einem Drehstromnetz mittels eines statischen Kompensators.

Die Netze der elektrischen Energieversorgung dienen in erster Linie der Übertragung von Wirkleistung. Erzeugte und verbrauchte Leistung müssen immer ausgeglichen sein, sonst kommt es zu Frequenzänderungen. Ebenso wie die Wirkleistungsbilanz muß auch die Blindleistungsbilanz stets so ausgeglichen sein, daß sich tragbare Spannungsverhältnisse im Netz ergeben. Die Blindleistung ist vor allem für das Spannungsniveau verantwortlich. Die Wirk- und Blindleistungsbilanz im Netz muß in jedem Zeitpunkt so ausgeglichen werden, daß Spannung und Frequenz innerhalb der vorgegebenen Grenzen liegen.

Aufgrund steigenden Stromverbrauchs und begrenzten Netzausbaumöglichkeiten werden die Energieübertragungsnetze immer intensiver genutzt. Blindleistungsflüsse im Netz sind Hauptverursacher für Spannungsabfälle und zusätzliche Netzverluste. Durch gezielten Einsatz von Blindleistungsmitteln, wie Kondensatoren und Spulen, können eine ausgeglichene Blindleistungsbilanz im Netz sowie damit die Auswirkung auf Netzspannung und Netzverluste reduziert werden. Die unterschiedlichen dynamischen Anforderungen können mit schaltbaren oder regelbaren Blindleistungselementen abgedeckt werden. Eine kontinuierliche und dynamische Änderung ist jedoch praktisch nur mit Stromrichterschaltungen möglich. Statische Kompensatoren in Thyristortechnik stellen die derzeit wirtschaftlichste Lösung zur dynamischen Blindleistungskompensation dar.

Der statische Kompensator, auch als Static Var Compensator (SVC) bezeichnet, kann eine thyristorgesteuerte Drosselspule thyristorgesteuerte Kapazitäten (TSC: Thyristor-Switched Capacitor) und eine fest angeschlossene Kapazität (FC: Fixed Capacitor) enthalten. Die Arbeitsweise und ein Vergleich zweier unterschiedlich aufgebauter statischer Kompensatoren kann der Zeitschrift "Energy & Automation X" (1989), Nr. 1, Seiten 12 bis 17, mit dem Titel "A Closer Look at Thyristors in SVC Applications", entnommen werden.

Im Aufsatz "BALANCING ASYMMETRIES BY MEANS OF THYRISTOR-CONTROLLED STATIC VAR COMPENSATORS" von B.Klerfors und T. Petersson, abgedruckt in Tagungsband Cigre, 28.08 bis 03.09.1988, Seiten 1 bis 6, werden zwei unterschiedliche Regelungen für einen statischen Kompensator (SVC) mit einer thyristorgesteuerten Spule vorgestellt. Die eine Regelung wird als "open-loop control" und die andere als "closed-loop control" bezeichnet. Unsymmetrische Lasten, wie starke einphasige Verbraucher oder ein Elektroofen, führen über den Innenwiderstand des speisenden Netzes zu Spannungsschwankungen und können andere Verbraucher stören. Diese unsymmetrischen Lasten produzieren Strom- und Spannungskomponenten eines Spannungsgegensystems, jedoch kein Nullsystem. Die Komponenten des Gegensystems in der Netzspannung haben einen negativen Einfluß auf Drehstrommotoren, wodurch sich deren Rotoren verstärkt erwärmen (Überlastung, verkürzte Lebensdauer). Die Regelung eines statischen Kompensators hat die Aufgabe, die Thyristoren des Kompensators immer so anzusteuern, daß die Blindstrombelastung des Netzes möglichst gering, möglichst konstant und die Netzbelastung insgesamt möglichst symmetrisch ist.

Bei der Open-loop control-Einrichtung werden aus gemessenen Lastströmen und den ermittelten Leiter-Leiter-Spannungen des Netzes phasenbezogene Blindleistungswerte berechnet, aus denen dann Blindleistungwerte des Kompensators berechnet werden. Diese Blindleistungwerte werden jeweils einem verstellbaren Blindleistungswert überlagert. Diese Summensignale werden anschließend in Zündsignale für die Thyristoren des Kompensators gewandelt. Mittels dieser Regelung können die unsymmetrischen Lastströme direkt kompensiert werden, das heißt, die Unsymmetrien werden auf einen einstellbaren Wert reduziert.

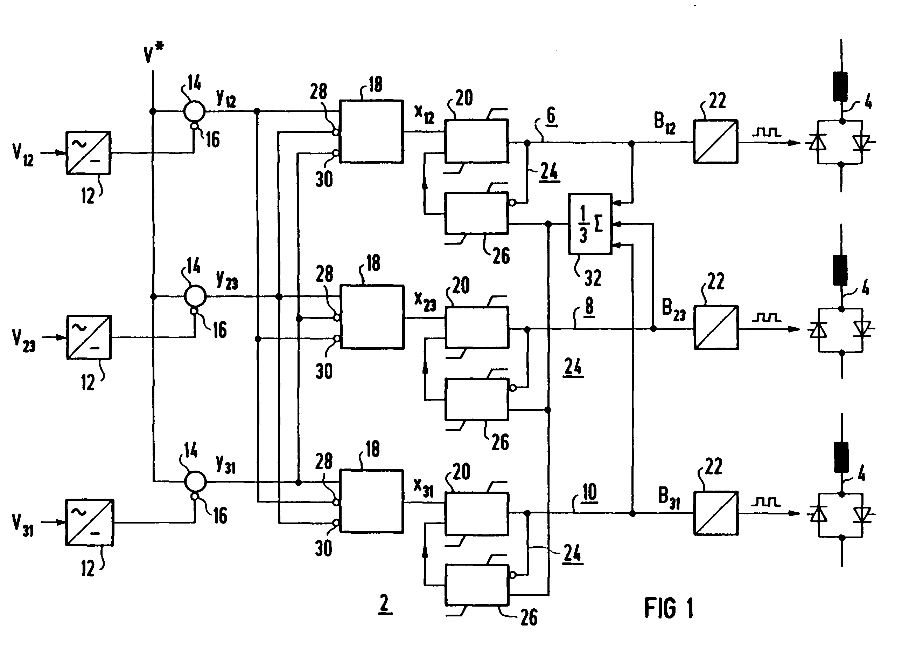

Die zweite Steuereinrichtung (closed-loop control) dieses Aufsatzes wird hier anhand der Figur 1 näher dargestellt und ausführlich beschrieben. Gegenüber der Open-loop control-Einrichtung werden bei dieser Steuereinrichtung die Leiter-Leiter-Spannungen verwendet. Dieses Steuerverfahren sorgt dafür, daß die Amplituden der Leiter-Leiter-Spannungen gleich groß gemacht werden, so daß symmetrische Verhältnisse vorliegen (gleichschenkliges Dreieck der Spannungsraumzeiger).

Aus dem Aufsatz "System variable evaluation with digital signal processors for SVC applications" von G. Welsh, K. Bergmann, L. Hügelschäfer, K.-F. Leowold und G. Wild, abgedruckt in "First International Conference on AC and DC Power Transmission", 1991, Seiten 255 bis 260, ist eine Spannungsregelung für einen statischen Kompensator (SVC), bestehend aus einer fest angeschlossenen Kapazität (FC), einer thyristorgesteuerten Spule (TCR) sowie einer thyristorgesteuerten Kapazität (TCR), bekannt, die digital aufgebaut ist. Diese Spannungsregelung ermittelt aus den drei Leiter-Erde-Spannungen eine Systemspannung (Mittelwert der drei Leiter-Leiter-Spannungen), die mit einer Systemsollspannung verglichen wird. Aus der entstehenden Regelabweichung wird ein Steuersignal des Kompensators ermittelt. Diese digitale Regelung verwendet bei der Ermittlung der Systemspannung einen Signalprozessor, der Bestandteil eines Mehrprozessor-Regelsystems (SIMADYN D) ist.

Der Erfindung liegt nun die Aufgabe zugrunde, ein Verfahren und eine Vorrichtung zur Reduzierung von Spannungsunsymmetrien in einem Drehstromnetz mittels eines statischen Kompensators anzugeben.

Diese Aufgabe wird erfindungsgemäß dadurch gelöst, daß einem erzeugten Blindleistungsmittelwert des statischen Kompensators jeweils ein Korrektursignal überlagert wird, das jeweils proportional einer Spannungsunsymmetrie ist, wobei jede Spannungsunsymmetrie durch paarweise Vergleiche einer korrespondierenden Leiter-Leiter-Spannung mit den anderen Leiter-Leiter-Spannungen des Drehstromnetzes erzeugt werden, wobei diese Leiter-Leiter-Spannungen aus den gemessenen Leiter-Erde-Spannungen des Drehstromnetzes ermittelt werden.

Der Vorteil dieses Verfahrens besteht darin, daß die beiden überlagerten Regelverfahren getrennt voneinander optimal eingestellt werden können und daß bestehende Anlagen, die eine eingangs beschriebene Spannungsregelung aufweisen, leicht mit dem Symmetrie-Regelverfahren nachgerüstet werden können. Durch die Aufspaltung des Verfahrens in zwei Teilverfahren besteht die Möglichkeit, daß bei einem Kompensator nur das Spannungs-Regelverfahren (Mitsystem-Regelung) aktiviert wird, wodurch der Wert der Netzspannung auf einen einstellbaren Sollwert geregelt wird oder die beiden überlagerten Regelverfahren aktiviert sind, wodurch zusätzlich zur Spannungsregelung auch noch vorhandene Unsymmetrien auf einen vorbestimmten Bereich reduziert werden können.

Bei einer Vorrichtung zur Durchführung des erfindungsgemäßen Verfahrens mit einem statischen Kompensator, der mittels einer Spannungsregelschaltung gesteuert wird, ist diese Spannungsregeischaltung mit einer Symmetrieregelschaltung kombiniert, der eingangsseitig gemessene Leiter-Erde-Spannungen des Drehstromnetzes zugeführt sind.

Der Vorteil dieser Vorrichtung, bei der zwei Regelschaltungen kombiniert werden, besteht darin, daß keine individuelle Regelcharakteristik pro Phase oder Mittelwertbildung eingestellt werden muß, sondern eine zentrale Einstellung der statischen Regelcharakteristik am Spannungsregler erfolgt. Außerdem kann diese Vorrichtung modular aufgebaut werden, wodurch die Möglichkeit besteht, daß eine bekannte Spannungsregelschaltung eines statischen Kompensators mit einer Symmetrieregelschaltung nachgerüstet werden kann.

Bei einer vorteilhaften Ausführungsform der Vorrichtung zur Durchführung des Verfahrens ist als Spannungsregelschaltung und/oder als Symmetrieregelschaltung ein Mikrocomputer vorgesehen. Durch die verwendung eines Mikrocompute.rs bzw. eines Mehrprozessor-Regelsystems vereinfacht sich der Aufbau wesentlich.

Vorteilhafte Ausgestaltungen des Verfahrens bzw. der Vorrichtung sind den Unteransprüchen zu entnehmen.

Zur weiteren Erläuterung des erfindungsgemäßen Verfahrens und der Vorrichtung zur Reduzierung von Spannungsunsymmetrien in einem Drehstromnetz mittels eines statischen Kompensators wird auf die Zeichnung Bezug genommen, in der ein Ausführungsbeispiel der erfindungsgemäßen Vorrichtung veranschaulicht ist.

| Figur 1 | zeigt ein Blockschaltbild der bekannten eingangs genannten Closed-loop control-Einrichtung, in |
| Figur 2 | ist ein Blockschaltbild einer Vorrichtung zur Durchführung des erfindungsgemäßen Verfahrens dargestellt, wobei in den |
| Figuren 3 bis 6 | Signale dieser Schaltung gemäß Figur 2 jeweils in einem Diagramm über der Zahl t dargestellt sind. |

Die Figur 1 zeigt eine bekannte Steuereinrichtung 2 für einen statischen Kompensator, von dem hier nur jeweils eine thyristorgesteuerte Spule 4 pro Phase dargestellt ist. Mittels dieser Steuereinrichtung 2 wird ein Verfahren zur Reduzierung von Spannungsunsymmetrien in einem Drehstromnetz durchgeführt. Diese bekannte Steuereinrichtung 2 wird in der eingangs genannten Cigre-Veröffentlichung als "closed-loop control" bezeichnet.

Diese Steuereinrichtung 2 besteht aus drei Kanälen 6, 8 und 10, die alle gleich aufgebaut sind. Jeder Kanal 6 bzw. 8 bzw. 10 weist eingangsseitig eine Einrichtung 12 auf, die aus der Leiter-Leiter-Spannung $V_{12}$ bzw. $V_{23}$ bzw. $V_{31}$ (AC-Signale) ein amplitudenproportionales Gleichstrom-Signal (DC-Signale) erzeugt. Dieses DC-Signal wird mittels eines Summierers 14 mit einem invertierenden Eingang 16 mit einem Sollwert $V^*$ verglichen. Die ermittelte Regelabweichung $y_{12}$ bzw. $y_{23}$ bzw. $y_{31}$ wird einer Entkopplungseinrichtung 18 zugeführt, die ausgangsseitig mit einem Spannungsregler 20, auch Phasenregler genannt, verknüpft ist. Das Ausgangssignal des Reglers 20 bestimmt die phasenbezogene Blindleistung $B_{12}$ bzw. $B_{23}$ bzw. $B_{31}$ des statischen Kompensators, die mittels eines Steuersatzes 22 in ein Steuersignal für die thyristorgesteuerte Spule 4 umgesetzt wird. Zum Erzielen der statischen Regelungscharakteristik ist dem Spannungsregler 20 ein Rückkopplungszweig 24 zugeordnet, der einen Regler 26 enthält.

Da jedem Kanal 6, 8 und 10 eine Leiter-Leiter-Spannung $V_{12}$, $V_{23}$ und $V_{31}$ zugeführt wird, sind diese Kanäle 6, 8 und 10 miteinander verkoppelt. Um diese Kopplung aufzuheben, ist in jedem Kanal 6, 8 und 10 eine Entkopplungseinrichtung 18 vorgesehen. Jede Entkopplungseinrichtung 18 weist zwei invertierende Eingänge 28 und 30 auf, die jeweils mit den Ausgängen der Summierer 14 der anderen beiden Kanäle 8 und 10 bzw. 10 und 6 bzw. 6 und 8 verbunden sind. Jede Entkopplungseinrichtung 18 bestimmt aus den drei Regelabweichungen $y_{12}$, $Y_{23}$ und $y_{31}$ ein entkoppeltes Reglersignal $x_{12}$ bzw. $x_{23}$ bzw. $x_{31}$. Diese entkoppelten Reglersignale $x_{12}$, $x_{23}$ und $x_{31}$ werden gemäß folgender Gleichungen:

$$X_{12} = (10y_{12} - 2y_{23} - 2y_{31})/9$$

$$X_{23} = (-2Y_{12} + 10Y_{23} - 2Y_{31})/9$$

$$X_{31} = (-2Y_{12} - 2Y_{23} + 10Y_{31})/9$$

bestimmt.

Der Regler 26 des Kanals 6 bzw. 8 bzw. 10 ist so eingestellt, daß das Ausgangssignal $B_{12}$ bzw. $B_{23}$ bzw. $B_{31}$ des Spannungsreglers 20 so lange auf seinen Eingang rückgekoppelt wird, solange sich die Spannungsunsymmetrie im Drehstromnetz innerhalb eines einstellbaren Bereiches aufhält. Sind die Unsymmetrien größer als der vorgegebene Bereich, so hat der Regler 26 seine Begrenzung erreicht, und die Rückkopplung wird auf diesen Wert gehalten. Außerdem wird dem Regler 26 ein Mittelwert der drei Blindleistungssignale $B_{12}$, $B_{23}$ und $B_{31}$ des statischen Kompensators zugeführt. Dieser Mittelwert wird mittels der Einrichtung 32 gebildet, die eingangsseitig jeweils mit den Ausgängen der Spannungsregler 20 der Kanäle 6, 8 und 10 verknüpft ist.

Mittels dieser bekannten Steuereinrichtung 2 besteht die Möglichkeit, Spannungsunsymmetrien im Drehstromnetz innerhalb eines vorgegebenen Bereiches zu halten. Diese mehrkanalige Ausführungsform ist sehr aufwendig wegen der Entkoppelung der Kanäle 6, 8 und 10.

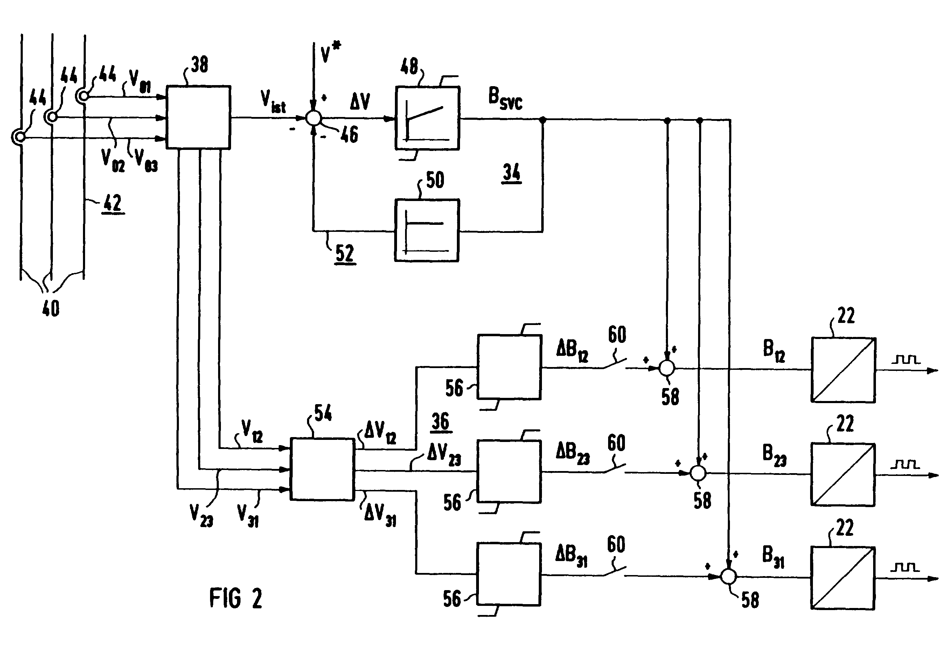

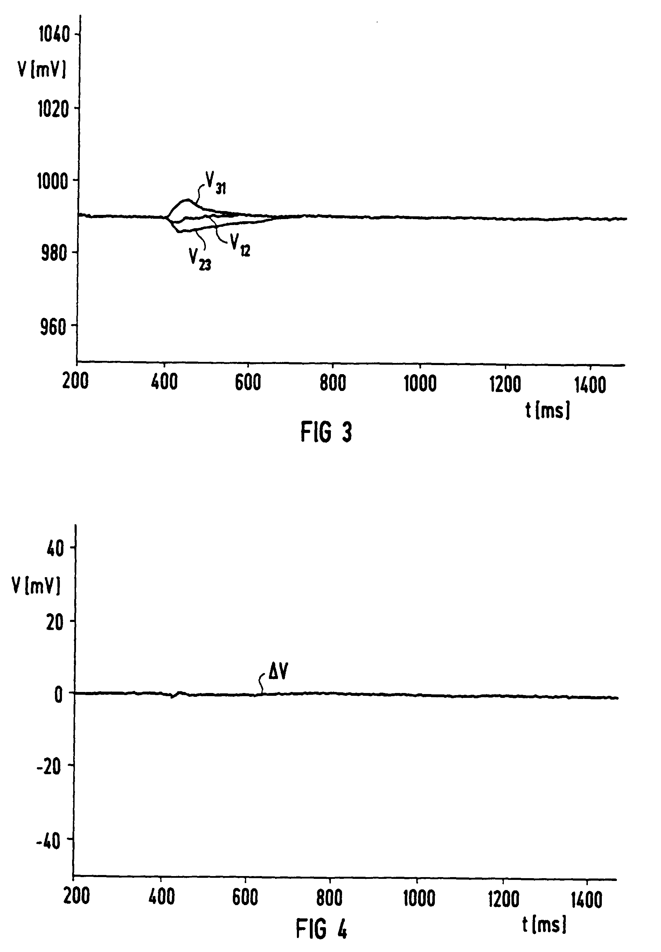

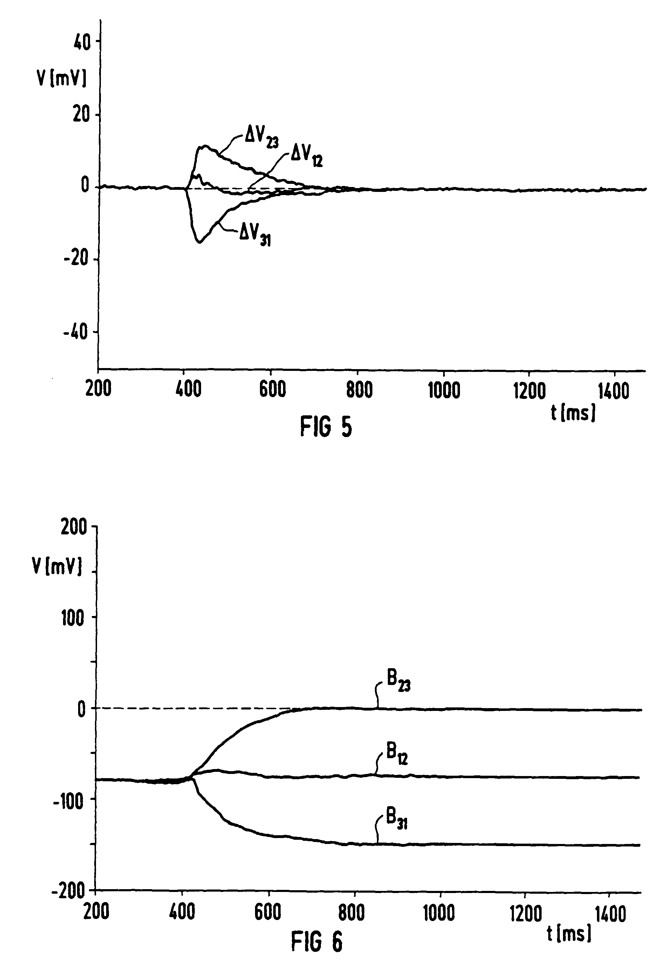

In der Figur 2 ist ein Blockschaltbild einer bevorzugten Vorrichtung zur Durchführung des erfindungsgemäßen Verfahrens dargestellt. Die einzelnen Signale - Leiter-Leiter-Spannungen $V_{12}$, $V_{23}$, $V_{31}$ (Figur 3), Regeldifferenz $\Delta V$ (Figur 4) der Systemspannung V, Unsymmetrie $\Delta V_{12}$, $\Delta V_{23}$, $\Delta V_{31}$ (Figur 5), phasenbezogene Blindleistung $B_{12}$, $B_{23}$, $B_{31}$ (Figur 6) - dieser Vorrichtung sind in den Figuren 3 bis 6 jeweils in einem Diagramm über der Zeit t dargestellt. Diese Vorrichtung besteht aus einer Spannungsregelschaltung 34 und einer Symmetrieregelschaltung 36. Diese Symmetrieregelschaltung 36 ist mit der Spannungsregelschaltung 34 kombiniert. Bei dieser bevorzugten Ausführungsform der Vorrichtung bildet die Istwertaufbereitung der Spannungsregelschaltung 34 und der Symmetrieregelschaltung 36 eine Baueinheit 38. Diese Istwertaufbereitung 38 erzeugt einerseits aus den Leiter-Erde-Spannungen $V_{01}$, $V_{02}$ und $V_{03}$, die jeweils mittels eines in einem Leiter 40 des Drehstromnetzes 42 angeordneten Spannungswandlers 44 gemessen werden, Leiter-Leiter-Spannungen $V_{12}$, $V_{23}$ und $V_{31}$ des Drehstromnetzes 42 und andererseits einen Mittelwert $V_{ist}$ dieser Leiter-Leiter-Spannungen $V_{12}$, $V_{23}$ und $V_{31}$, der auch als Istwert $V_{ist}$ der Systemspannung V bezeichnet wird.

Bei der Aufbereitung der gemessenen Leiter-Erde-Spannungen $V_{01}$, $V_{02}$ und $V_{03}$ (AC-Signale) werden diese in Leiter-Leiter Spannungen transformiert und anschließend gleichgerichtet und gefiltert, um amplitudenproportionale Gleichstromsignale der verketteten Spannungen $V_{12}$, $V_{23}$ und $V_{31}$ zu erhalten. Zusätzlich wird der Mittelwert $V_{ist}$ aus diesen verketteten Spannungen

$V_{12}$, $V_{23}$ und $V_{31}$ gebildet. Einzelheiten zu der Istwertaufbereitung 38 ist dem eingangs genannten Konferenzbericht zu entnehmen.

Die Spannungsregelschaltung 34 besteht eingangsseitig aus einem Vergleicher 46 mit drei Eingängen, dem ein Spannungsregler 48 nachgeschaltet ist. Der Ausgang des Spannungsreglers 48 ist über einen Regler 50 in einem Rückkopplungszweig 52 mit einem invertierenden Eingang des Vergleichers 46 verknüpft. Außerdem ist der Ausgang jeweils mit einem der drei Steuersätze 22 der thyristorgesteuerten Spulen 4 elektrisch leitend verbunden. Der Istwert $V_{ist}$ der Systemspannung V steht an einem zweiten invertierenden Eingang des Vergleichers 46 an, wobei ein Sollwert $V^*$ der Systemspannung V den nicht invertierenden Eingang des Vergleichers 46 ansteht. Die ermittelte Regeldifferenz $\Delta V$ - zeitlich dargestellt im Diagramm der Figur 4 - wird dem Spannungsregler 48 zugeführt, der daraus einen Suszeptanzmittelwert $B_{SVC}$ des statischen Kompensators erzeugt. Dem Verlauf der Regeldifferenz $\Delta V$ der Systemspannung V gemäß dem Diagramm der Figur 4 kann man zum Zeitpunkt der Unsymmetrien $\Delta V_{12}$, $\Delta V_{23}$ und $\Delta v_{31}$ eine Abweichung vom Wert Null entnehmen, die jedoch sehr gering im Vergleich zur Darstellung gemäß Figur 5 ist. Dieser Spannungsregler 48, der auch als Mitsystemregler bezeichnet wird, bestimmt die mittlere Aussteuerung des Kompensators und ist identisch für alle drei thyristorgesteuerten Spulen 4. Die statische Regelungscharakteristik wird durch eine Rückkopplung des Ausgangs des Spannungsreglers 48 erzielt. Diese Spannungsregelung 48 hat eine schnelle Reaktionszeit (ca. 20 ms) und regelt das Mitsystem der Netzspannung.

Zur Symmetrierung der Netzspannung wird diese mittlere Aussteuerung $B_{SVC}$ individuell für jede Phase mit einem Korrektursignal $\Delta B_{12}$, $\Delta B_{23}$ und $\Delta B_{31}$ überlagert. Zu diesem Zweck weist die Symmetrieregelschaltung 36 eingangsseitig eine Einrichtung 54 auf, die die amplitudenproportionalen DC-Signale der drei verketteten Spannungen $V_{12}$, $V_{23}$ und $V_{31}$ - zeitliche Darstellung im Diagramm der Figur 3 - paarweise untereinander vergleicht, um die Unsymmetrien $\Delta V_{12}$, $\Delta V_{23}$ und $\Delta V_{31}$, die zeitlich in einem Diagramm der Figur 5 dargestellt sind, zu ermitteln. Dieser paarweise Vergleich zur Bestimmung der Unsymmetrien $\Delta V_{12}$, $\Delta V_{23}$ und $\Delta V_{31}$ wird durch folgende Gleichungen:

$$\Delta V_{12} = 1/3 \, (-2V_{12} + V_{23} + V_{31})$$

$$\Delta V_{23} = 1/3 \, (V_{12} - 2V_{23} + V_{31})$$

$$\Delta V_{31} = 1/3 \, (V_{12} + V_{23} - 2V_{31})$$

näher beschrieben. Diese Unsymmetrien $\Delta V_{12}$, $\Delta V_{23}$ und $\Delta V_{31}$ werden jeweils einem Regler 56 zugeführt, an deren Ausgängen die Korrektursignale $\Delta B_{12}$, $\Delta B_{23}$ und $\Delta B_{31}$ anstehen. In einer besonderen Ausführungsform werden nur Unsymmetrien ab einer vorgegebenen Größe weiterverarbeitet. Zur Feststellung dieser Mindestunsymmetrien kann einerseits eine Vorrichtung vorgesehen sein oder andererseits diese Vorrichtung Bestandteil der jeweiligen Regler 56 sein. Diese Grenze ist beliebig vorgebbar. Diese Korrektursignale $\Delta B_{12}$, $\Delta B_{23}$ und $\Delta B_{31}$ werden jeweils zu dem mittleren Aussteuerwert $B_{SVC}$ des statischen Kompensators mittels eines Addierers 58 addiert. Nach dieser Addition stehen die phasenbezogenen Suszeptanzsignale $B_{12}$, $B_{23}$ und $B_{31}$ den Steuersätzen 22 zur Verfügung, die jeweils phasenbezogene Ansteuersignale für die thyristorgesteuerten Spulen 4 generieren. Die Korrekturregler 56 besitzen jeweils im Gegensatz zum Spannungsregler 48 eine langsamere Reaktionszeit (ca. 200 ms), um Wechselwirkungen mit dem Mitsystemregler 48 zu vermeiden.

Bei dieser bevorzugten Ausführungsform ist jeweils zwischen dem Korrekturregler 46 und dem Addierer 58 ein Schalter 60 angeordnet, der von einer Warte aus gesteuert werden kann. Mittels dieser Schalter 60 kann die Symmetrieregelschaltung 36 temporär oder dauerhaft abgeschaltet werden. Durch diese Trennung können die beiden Regelschaltungen 34 und 36 jeweils modular aufgebaut werden. Außerdem besteht die Möglichkeit, die Symmetrieregelschaltung 36 nachträglich in eine Regelung einer Kompensationsanlage zu integrieren, die einen Mitsystemregler 48 aufweist (eingangs genannter Konferenzbericht).

**Patentansprüche**

1. Verfahren zur Reduzierung von Spannungsunsymmetrien ($\Delta V_{12}$, $\Delta V_{23}$, $\Delta V_{31}$) in einem Drehstromnetz (42) mittels eines statischen Kompensators, wobei zur Erzeugung von phasenbezogenen Suszeptanzwerten ($B_{12}$, $B_{23}$, $B_{31}$) einem erzeugten Suszeptanzmittelwert ($B_{SVC}$) des statischen Kompensators jeweils ein Korrektursignal ($\Delta B_{12}$, $\Delta B_{23}$, $\Delta B_{31}$) überlagert wird, das jeweils proportional einer Spannungsunsymmetrie ($\Delta V_{12}$, $\Delta V_{23}$, $\Delta V_{31}$) ist, wobei jede Spannungsunsymmetrie ($\Delta V_{12}$, $\Delta V_{23}$, $\Delta V_{31}$) durch paarweise Vergleiche einer korrespondierenden Leiter-Leiter-Spannung ($V_{12}$, $V_{23}$, $V_{31}$) mit den anderen Leiter-Leiter-Spannungen ($V_{23}$, $V_{31}$, $V_{12}$; $V_{31}$, $V_{12}$, $V_{23}$) des Drehstromnetzes 42 erzeugt werden, wobei diese Leiter-Leiter-Spannungen ($V_{12}$, $V_{23}$, $V_{31}$) aus den gemessenen Leiter-Erde-Spannungen ($V_{01}$, $V_{02}$, $V_{03}$) des Drehstromnetzes 42 ermittelt werden.

2. Verfahren nach Anspruch 1, wobei der Suszeptanzmittelwert ($B_{SVC}$) mittels einer Spannungsregelschaltung (34) erzeugt werden, in der ein aus den gemessenen Leiter-Erde-Spannungen ($V_{01}$, $V_{02}$, $V_{03}$) des Drehstromnetzes (42) gebildete Mittelwert ($V_{ist}$) der Systemspannung (V) auf einen vorbestimmten Sollwert (V*) geregelt wird.

3. Vorrichtung zur Durchführung des Verfahrens nach Anspruch 1 mit einem statischen Kompensator, der mittels einer Spannungsregelschaltung (34) gesteuert wird, wobei diese Spannungsregelschaltung (34) mit einer Symmetrieregelschaltung (36) kombiniert ist, der eingangsseitig gemessene Leiter-Leiter-Spannungen ($V_{01}$, $V_{02}$, $V_{03}$) des Drehstromnetzes (42) zugeführt sind.

4. Vorrichtung nach Anspruch 3, wobei die Symmetrieregelschaltung (36) aus einer Istwertaufbereitung, einer Einrichtung (54) und mehreren Korrekturreglern (56) besteht, wobei die Einrichtung (54) eingangsseitig über die Istwertaufbereitung mit den in den Leitungen (40) des Drehstromnetzes (42) angeordneten Spannungswandlern (44) und ausgangsseitig jeweils mit einem Korrekturregler (56) verknüpft ist.

5. Vorrichtung nach Anspruch 3, wobei zwischen der Einrichtung (54) und den Korrekturreglern (56) jeweils ein Schwellenwertgeber angeordnet ist.

6. Vorrichtung nach Anspruch 3, wobei der Ausgang der Spannungsregelschaltung (34) mit mehreren Addierern (58) versehen ist, und wobei die Spannungsregelschaltung (34) eingangsseitig über eine Istwercaufbereitung mit dem Spannungswandler (44) des Drehstromnetzes (42) verknüpft ist.

7. Vorrichtung nach Anspruch 4 und 6, wobei die Ausgänge der Symmetrieregelschaltung (36) jeweils über einen Schalter (60) mit den Addierern (58) verbindbar sind.

8. Vorrichtung nach Anspruch 4 und 6, wobei die Istwertaufbereitung der Symmetrieregelschaltung (36) und die Istwertaufbereitung der Spannungsregelschaltung (34) eine Baueinheit (38) bilden.

9. Vorrichtung nach Anspruch 3, wobei als Spannungsreglerschaltung (34) und/oder als Symmetrieregelschaltung (36) ein Mikrocomputer vorgesehen ist.

**Claims**

1. Method for reducing voltage imbalances ($\Delta V_{12}$, $\Delta V_{23}$, $\Delta V_{31}$) in a three-phase network (42) by means of a static compensator, a correction signal ($\Delta B_{22}$, $\Delta B_{23}$, $\Delta B_{31}$) in each case being superimposed on a mean susceptance value ($B_{SVC}$), which is produced, of the static compensator in order to produce phase-related susceptance values ($B_{12}$, $B_{23}$, $B_{31}$), which correction signal ($\Delta B_{12}$, $\Delta B_{23}$, $\Delta B_{31}$) is in each case proportional to a voltage imbalance ($\Delta V_{12}$, $\Delta V_{23}$, $\Delta V_{31}$), each voltage imbalance ($\Delta V_{12}$, $\Delta V_{23}$, $\Delta V_{31}$) being produced by comparisons, in pairs, of a corresponding line to line voltage ($V_{12}$, $V_{23}$, $V_{31}$) with the other line to line voltages ($V_{23}$, $V_{31}$, $V_{12}$; $V_{31}$, $V_{12}$, $V_{23}$) of the three-phase network 42, these line to line voltages ($V_{12}$, $V_{23}$, $V_{31}$) being determined from the measured line to earth voltages ($V_{01}$, $V_{02}$, $V_{03}$) of the three-phase network 42.

2. Method according to Claim 1, the mean susceptance value ($B_{SVC}$) being produced by means of a voltage control circuit (34) in which a mean value ($V_{ist}$) of the system voltage ($V$), which mean value ($V_{ist}$) is formed from the measured line to earth voltages ($V_{01}$, $V_{02}$, $V_{03}$) of the three-phase network (42), is controlled to a predetermined required value ($V^*$).

3. Device for carrying out the method according to Claim 1 having a static compensator which is controlled by means of a voltage control circuit (34), this voltage control circuit (34) being combined with a balance control circuit (36) to which measured line to line voltages ($V_{01}$, $V_{02}$, $V_{03}$) of the three-phase network (42) are supplied on the input side.

4. Device according to Claim 3, the balance control circuit (36) comprising actual value conditioning, a device (54) and a plurality of correction controllers (56), the device (54) being linked, on the input side, via the actual value conditioning to the voltage converters (44) which are arranged in the lines (40) of the three-phase network (42), and in each case being linked to a correction controller (56) on the output side.

5. Device according to Claim 3, a threshold value transmitter in each case being arranged between the device (54) and the correction controllers (56).

6. Device according to Claim 3, the output of the voltage control circuit (34) being provided with a plurality of adders (58), and the voltage control circuit (34) being linked, on the input side, via actual value conditioning to the voltage converter (44) of the three-phase network (42).

7. Device according to Claim 4 and 6, it being possible to connect the outputs of the balance control circuit (36) to the adders (58), in each case via a switch (60).

8. Device according to Claim 4 and 6, the actual value conditioning of the balance control circuit (36) and the actual value conditioning of the voltage control circuit (34) forming a unit (38).

9. Device according to Claim 3, a microcomputer being provided as the voltage controller circuit (34) and/or as the balance control circuit (36).

**Revendications**

1. Procédé de réduction de dissymétries de tension ($\Delta V_{12}$, $\Delta V_{23}$, $\Delta V_{31}$) dans un réseau triphasé (42) au moyen d'un compensateur statique, dans lequel, pour produire des valeurs de susceptance ($B_{12}$, $B_{23}$, $B_{31}$) rapportées aux phases, on superpose à une valeur moyenne de susceptance produite ($B_{SVC}$) du compensateur statique un signal ($\Delta B_{12}$, $\Delta B_{23}$ $\Delta B_{31}$) de correction, qui est proportionnel à une dissymétrie ($\Delta V_{12}$, $\Delta V_{23}$, $\Delta V_{31}$) de tension, dans lequel on produit chaque dissymétrie ($\Delta V_{12}$, $\Delta V_{23}$, $\Delta V_{31}$) de tension par comparaison par paire d'une tension correspondante phase à phase ($V_{12}$, $V_{23}$, $V_{31}$), aux autres tensions phase à phase ($V_{23}$, $V_{31}$, $V_{12}$ ; $V_{31}$, $V_{12}$, $V_{23}$) du réseau triphasé (42), on détermine ces tensions phase à phase ($V_{12}$, $V_{23}$, $V_{31}$) à partir des tensions étoilées mesurées ($V_{01}$, $V_{02}$, $V_{03}$) du réseau triphasé (42).

2. Procédé suivant la revendication 1, dans lequel on produit la valeur moyenne ($B_{SVC}$) de susceptance au moyen d'un circuit (34) de régulation de tension, dans lequel on règle une valeur moyenne ($V_{ist}$) de la tension ($V$) de système, qui est formée à partir des tensions étoilées mesurées ($V_{01}$, $V_{02}$, $V_{03}$) du réseau triphasé (42), à une valeur ($V^*$) de consigne prescrite.

3. Dispositif pour la mise en oeuvre du procédé suivant la revendication 1, comportant un compensateur statique, qui est commandé au moyen d'un circuit (34) de régulation de tension, ce circuit (34) de régulation de tension étant combiné à un circuit (36) de régulation de symétrie, auquel sont envoyées en entrée des tension phase à phase mesurées ($V_{01}$, $V_{02}$, $V_{03}$) du réseau triphasé (42).

4. Dispositif suivant la revendication 3, dans lequel le circuit (36) de régulation de symétrie est constitué d'un dispositif de préparation de valeur réelle, d'un dispositif (54) et de plusieurs régulateurs (56) de correction, le dispositif (54) étant combiné en entrée par intermédiaire du dispositif de préparation de valeur réelle avec les convertisseurs (44) de tension disposés dans les conducteurs (40) du réseau triphasé (42) et en sortie avec un régulateur (56) de correction.

5. Dispositif suivant la revendication 3, dans lequel il est disposé entre le dispositif (54) et les régulateurs (56) de correction un indicateur de seuil.

6. Dispositif suivant la revendication 3, dans lequel la sortie du circuit (34) de régulation de tension est munie de plusieurs additionneurs (58) et dans lequel le circuit (34) de régulation de tension est combiné en entrée par intermédiaire d'un dispositif de préparation de valeur réelle au convertisseur (44) de tension du réseau triphasé (42).

7. Dispositif suivant les revendications 4 et 6, dans lequel les sorties du circuit (36) de régulation de symétries peuvent être reliées par l'intermédiaire d'un interrupteur (60) aux additionneurs (58).

8. Dispositif suivant les revendications 4 et 6, dans lequel le dispositif de préparation de valeur réelle du circuit (36) de régulation de symétrie et le dispositif de préparation de valeur réelle du circuit (34) de régulation de tension forment une unité structurelle (38).

9. Dispositif suivant la revendication 3, dans lequel il est prévu comme circuit (34) de régulation de tension et/ou comme circuit (36) de régulation de symétrie un micro-ordinateur.

FIG 1

FIG 2

FIG 3

FIG 4

FIG 5

FIG 6